**Europäisches Patentamt**

**European Patent Office**

**Office européen des brevets**

(19)

(11) Veröffentlichungsnummer : **0 368 090 B1**

(12) # EUROPÄISCHE PATENTSCHRIFT

(45) Veröffentlichungstag der Patentschrift :
**10.06.92 Patentblatt 92/24**

(51) Int. Cl.$^5$ : **B60S 1/32**

(21) Anmeldenummer : **89119960.6**

(22) Anmeldetag : **27.10.89**

(54) **Wischhebel, Wischarm und Wischblatt für eine Scheibenreinigungsanlage.**

(30) Priorität : **11.11.88 DE 3838287**

(43) Veröffentlichungstag der Anmeldung :
**16.05.90 Patentblatt 90/20**

(45) Bekanntmachung des Hinweises auf die
Patenterteilung :
**10.06.92 Patentblatt 92/24**

(84) Benannte Vertragsstaaten :
**ES FR GB IT SE**

(56) Entgegenhaltungen :
**DE-A- 2 812 413**
**DE-A- 3 517 575**
**DE-A- 3 532 535**
**DE-A- 3 532 536**

(73) Patentinhaber : **SWF Auto-Electric GmbH**
**Stuttgarter Strasse 119 Postfach 135**
**W-7120 Bietigheim-Bissingen (DE)**

(72) Erfinder : **Egner-Walter, Bruno**
**Käferflugstrasse 43**
**W-7100 Heilbronn (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf einen Wischhebel gemäß den Merkmalen des Oberbegriffs des Anspruchs 1.

Bei vielen modernen Kraftfahrzeugen werden heute Wischhebel mit einem Wischarm gemäß DE OS 28 124 13 verwendet, dessen Wischstange zweifach seitlich derart abgewinkelt ist, daß der am Befestigungsteil fixierte Abschnitt der Wischstange seitlich neben dem Wischblatt verläuft, obwohl der Endbereich zentral über dem Hauptbügel angordnet ist und sein meist hakenförmiges Halteelement zwischen die Seitenwange des Wischblattes greift. Die Länge des Endbereiches dieser Wischstange ist dabei verhältnismäßig klein, sie entspricht meist nur der halben Länge des Durchbruches im Steg des Tragbügels. Unmittelbar an diese seitliche Abbiegung schließt sich auch eine Abbiegung zur zu reinigenden Scheibe hin an, so daß also die Wischstange schon in verhältnismäßig geringem Abstand von der Anlenkstelle seitlich neben dem Hauptbügel, insbesondere also unterhalb des Steges des Hauptbügels verläuft. Durch diese besondere Gestalt der Wischarme soll die Bauhöhe verringert werden. Wischarme dieser Art haben sich in der Praxis weitgehend durchgesetzt, weil die Bauhöhe des Wischhebels die Abhebeneigung des Wischers bei hohen Fahrgeschwindigkeiten beeinflußt.

Aus DE OS 35 32 535 sind auch Wischhebel mit einem Wischblatt bekannt, an dessen Hauptbügel einstückig eine Windleitschaufel angeformt ist. In der Praxis weitgehend durchgesetzt haben sich Ausführungen, bei denen die Windleitschaufel einstückig vom unteren Rand der Seitenwange des Hauptbügels ausgeht, wobei sich diese Schaufel nahezu über die gesamte Länge des Hauptbügels erstreckt. Durch derartige Windleitvorrichtungen wird der Abhebeneigung des Wischers bei hohen Fahrgeschwindigkeiten ebenfalls entgegengewirkt.

Betrachtet man moderne Fahrzeuge, so wird man feststellen, daß das Wischblatt an einem derart abgewinkelten Wischarm so aufgehängt ist, daß in der Parkstellung des Scheibenwischers der Wischhebel auf der zum Scheibenrand zeigenden Seite des Wischblattes verläuft. Bei Wischblättern mit einer Schaufel liegt diese Schaufel auf der gleichen Seite des Wischblattes, was zur Folge hat, daß normalerweise derartige Schaufelblätter mit den aus der Praxis bekannten abgewinkelten Armen so ohne weiteres nicht kombinierbar sind. Es kann nämlich nicht ausgeschlossen werden, daß durch die Abwinklung des Wischarmes in einer Ebene senkrecht zu der zu reinigenden Scheibe der am Befestigungsteil fixierte, tiefer liegende Abschnitt mit der Schaufel kollidiert. Dies gilt selbst dann, wenn diese Schaufel vom unteren Rand der Seltenwange des Tragbügels ausgeht. Eine sehr viel größere Gefahr besteht natürlich dann, wenn diese Windleitfläche unmittelbar durch die Seitenwange des Tragbügels selbst gebildet ist und somit also gewissermaßen vom Steg dieses Tragbügels ausgeht.

Der vorliegenden Erfindung liegt daher die Aufgabe zugrunde, auf möglichst einfache Welse einen Wischhebel mit guten Strömungseigenschaften zu schaffen, wobei der Wischarm möglichst universell für unterschiedliche Wischblattypen verwendbar sein soll.

Diese Aufgabe wird erfindungsgemäß durch einen Wischarm gemäß Anspruch 1, Anspruch 6 oder Anspruch 10 gelöst.

Der Erfindung liegt dabei die Überlegung zugrunde, daß durch die Verlängerung des Endbereiches der Wischstange gegenüber bekannten Ausführungen die Strömungseigenschaften wesentlich verbessert werden, weil nun im Schaufelbereich die Strömung nicht wieder durch parallel verlaufende Wischstangenteile verwirbelt wird.

Bei den aus der Praxis bekannten Wischblättern erstreckt sich die Windleitschaufel nahezu über die gesamte Länge des Hauptbügels. Die Länge des Endbereichs dieser Wischstange soll dann größer sein als die halbe Windleitschaufellänge, wobei unterstellt wird, daß der Hauptbügel etwa mittig den Gelenkbolzen zur Anlenkung an der Wischstange aufweist. Ein günstiges Strömungsverhalten erzielt man durch eine Anpassung des seitlichen Versatzes an die seitliche Ausdehnung der Windleitschaufel entsprechend den Merkmalen der Ansprüche 3 und 4.

Bei einer ausreichend großen Länge dieses Endbereiches der Wischstange können damit an einen Wischarm auch Wischblätter angelenkt werden, bei denen die Windleitschaufel vom Steg des Hauptbügels ausgeht. Eine solche Wischstange eignet sich aber insbesondere auch zur Anlenkung von Wischblättern mit einer Schaufel, die von dem der Wischleiste zugewandten Rand der Seitenwange des Hauptbügels ausgeht.

Bei derartigen Ausführungen wird das Strömungsverhalten weiter dadurch verbessert, daß man auch den Versatz in der Höhe gewissermaßen der Höhe der Windleitschaufel anpaßt. Besonders bevorzugt wird eine Ausführung, bei der dieser Versatz in der Höhe derart gewählt ist, daß in der Betriebslage die der Wischleiste zugewandte Stirnfläche der Wischstange wenigstens annähernd in Verlängerung der freistehenden Kante der Windleitschaufel verläuft. Da man im Interesse eines guten Strömungsverhaltens bestrebt ist, den Abstand zwischen der zu reinigenden Scheibe und der freistehenden Kante der Windleitschaufel möglichst klein zu halten, wird man gemäß einer vorteilhaften Weiterbildung der Erfindung diese freistehende Kante der Windleitschaufel und den nahe daran anschließenden Bereich der Wischstange entsprechend der Scheibenkrümmung bogenfönmig ausbilden.

Besonders bevorzugt wird eine Ausführung, bei der die Wischstange wenigstens bereichsweise leicht derart gekrümmt ist, daß in der Parkstellung diese Wischstange parallel zum Scheibenrand verläuft.

Die Erfindung wird nachstehend anhand des in der Zeichnung dargestellten Ausführungsbeispiels näher erläutert. Es zeigen:

Fig. 1 eine Seitenansicht auf einen Teilbereich eines Wischhebels,

Fig. 2 eine Ansicht in Pfeilrichtung P und

Fig. 3 einen Teilschnitt entlang der Schnittlinie III-III in vergrößerter, nicht maßstäblicher Darstellung.

Zu einem Wischhebel einer Scheibenreinigungsanlage eines Kraftfahrzeugs gehört üblicherweise ein Wischarm mit einer Wischstange 10, die üblicherweise über ein Gelenkteil an einem Befestigungsteil schwenkbar angelenkt ist, das auf einer Wischerwelle fixiert wird. Gelenkteil und Befestigungsteil des Wischarms sind aus Gründen einer besseren Übersichtlichkeit in der Zeichnung nicht dargestellt. Bei der insgesamt einstückigen Wischstange 10 können drei Abschnitte voneinander unterschieden werden. Der sich über das Gelenkteil an das Befestigungsteil anschließende Abschnitt ist in der Zeichnung mit 11 bezeichnet. Daran schließt sich eine Übergangszone 12 an. Von dieser Übergangszone 12 geht der Endbereich 13 der Wischstange aus, der in ein hakenförmiges Halteelement 14 ausläuft.

Zu dem Wischhebel einer Scheibenreinigungsanlage gehört üblicherweise auch das Wischblatt, das in der Zeichnung insgesamt mit 30 bezeichnet ist. Das Wischblatt hat ein mehrteiliges Tragbügelsystem mit einem Hauptbügel 31, der einen im wesentlichen U-förmigen Querschnitt mit zwei parallel zueinander stehenden Seitenwangen 32 und 33 und einen diese Seitenwangen verbindenden Steg 34 aufweist. Zwischen den Seitenwangen ist in bekannter Weise ein Gelenkbolzen 35 festgelegt, der zur Anlenkung des Wischblattes 30 am Halteelement 14 der Wischstange 10 dient. Üblicherweise verwendet man zwischen diesem Gelenkbolzen 35 und dem hakenförmigen Halteelement noch ein Zwischenstück, das in der Zeichnung jedoch aus Gründen einer besseren Übersichtlichkeit nicht dargestellt ist, zumal die Art dieser Verbindung für die vorliegende Erfindung nicht von Bedeutung ist.

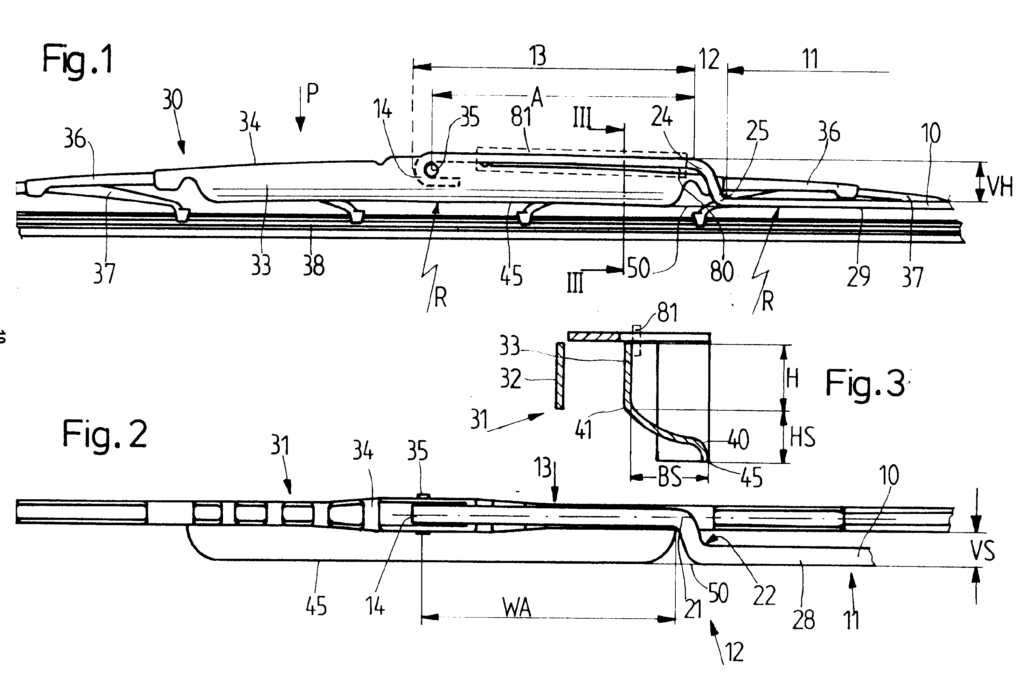

Insbesondere aus Fig. 3 erkennt man, daß vom unteren Rand der Seitenwange 33 eine Windleitschaufel 40 seitlich absteht. Diese Windleitschaufel erstreckt sich nahezu über die gesamte Länge des Hauptbügels 31, an dessen Enden Zwischenbügel 36 und daran wieder Krallenbügel 37 angelenkt sind, über die die Wischleiste 38 geführt wird. Die Windleitschaufel 40 geht von dem der Wischleiste 38 zugewandten Rand 41 der Seitenwange 33 des Hauptbügels 31 aus. Die Windleitschaufel 40 hat eine seitliche Ausdehnung oder Breite BS und - ausgehend von dem unteren Rand 41 der Seitenwange 33 - eine Höhe HS. Sie erstreckt sich - gemessen vom Gelenkbolzen 35 - über eine Länge WA. Die Großen HS und BS stehen in einem bestimmten Verhältnis zur Höhe H der Seitenwange 33. Es wird hierzu hingewiesen auf die DE-PS 35 32 536, die vollinhaltlich hier einbezogen wird und die alle Einzelheiten eines solchen Wischblattes zeigt.

Für die vorliegende Erfindung wesentlich ist nun die Gestaltung der Wischstange 10 in Anpassung an die Windleitschaufel 40. Aus Fig. 2 geht hervor, daß diese Wischstange 10 in der Übergangszone 12 in einer Ebene zweifach abgewinkelt ist, die parallel zu der zu reinigenden Scheibe oder auch parallel zum Steg 34 des Hauptbügels 32 verläuft. Die erste seitliche Abbiegung ist dabei mit 21, die zweite seiliche Abbiegung mit 22 bezeichnet. Die Abbiegungen 21 und 22 sind einander entgegengesetzt gerichtet derart, daß zwischen dem zum Befestigungsteil führenden Abschnitt 10 und dem Endbereich 13 der Wischstange ein seitlicher Versatz VS geschaffen ist, wobei die Wischstangenabschnitte im wesentlichen parallel zum Hauptbügel 31 verlaufen.

Aus Fig. 1 geht hervor, daß diese Wischstange 10 in der Übergangszone 12 außerdem in einer zur ersten Ebene im wesentlichen senkrechten zweiten Ebene, also in einer Ebene senkrecht zum Gelenkbolzen 35, zweifach abgewinkelt ist. Die erste Abwinklung nach unten ist in Fig. 1 mit 24, die andere mit 25 bezeichnet. Durch diese beiden Abbiegungen 24 und 25 ist also ein Höhenversatz VH zwischen dem Endbereich 13 und dem Abschnitt 11 der Wischstange 10 geschaffen.

Die Abbiegung 24 nach unten kann sich dabei an die Abbiegung 22 anschließen, sobald die Wischstange seitlich neben dem Hauptbügel verläuft. Die erste Abbiegung 24 zur Wischleiste 38 hin könnte sich aber auch erst an die zweite seitliche Abbiegung 22 anschließen. Im ersten Fall wären also gewissermaßen die seitlichen Abbiegungen und dazu senkrechten Abbiegungen ineinandergeschachtelt, im zweiten Fall würde sich der Höhenversatz an den seitlichen Versatz anschließen. Die Gestaltung derartiger Übergangszonen 12 ist an sich bekannt und kann beispielsweise aus der DE-AS 28 12 413, deren Inhalt hier voll einbezogen wird, entnommen werden.

Das wesentliche Merkmal der vorliegenden Erfindung besteht nun darin, daß diese Übergangszone, insbesondere also die erste seitliche Abbiegung 21, in einem Abstand A Halteelement 14 angeordnet ist, der größer ist als der erwähnte Abstand WA des Endes der Windleitschaufel 40 vom Gelenkbolzen 35. Damit wird eine ausreichende Schwenkbeweglichkeit des Wischblattes gegenüber dem Wischarm auch dann sichergestellt, wenn dieses Wischblatt eine Schaufel aufweist.

Aus der Zeichnung kann entnommen werden, daß also dieser Abstand A bzw. die Länge des Endbereiches 13 der Wischstange 10 größer ist als die halbe Windleitschaufellänge WA. Der Gelenkbolzen 35 ist nämlich üblicherweise mittig am Hauptbügel 31 angeordnet, und die Windleitschaufel erstreckt sich nahezu über die gesamte Länge des Hauptbügels.

Bei einer bevorzugten und in der Zeichnung dargestellten Ausführung ist der seitliche Versatz VS und der Versatz in der Höhe VH auf die Abmessungen der Windleitschaufel 40 abgestimmt. Der seitliche Versatz VS des Wischstangenabschnittes 11 ist nämlich nicht größer als die seitliche Ausdehnung BS der Windleitschaufel 40. Die vom Wischblatt abgewandte Seitenfläche 28 der Wischstange 10 soll annähernd in Verlängerung der freistehenden Kante 45 der Windleitschaufel 40 verlaufen. Der Versatz in der Höhe ist auf die Höhe H der Seitenwange des Tragbügels plus der Höhe HS der Windleitschaufel 40 abgestimmt und insbesondere so gewählt, daß in der Betriebslage die der Wischleiste zugewandte Stirnfläche 29 wenigstens annähernd in Verlängerung der freistehenden Kante 45 der Windleitschaufel 40 verläuft. In den Fig. 1 und 2 ist diese gedachte Verlängerungslinie eingezeichnet und mit 50 bezeichnet.

Schließlich ist in Fig. 1 noch angedeutet, daß die freistehende Kante 45 der Windleitschaufel 40 eine bogenförmige Kontur mit dem Radius R aufweisen soll. Dieser Radius R ist so gewählt, daß er der Scheibenkrümmung wenigstens annähernd entspricht. Damit kann nämlich dieser untere Rand der Schaufel möglichst nahe an die zu reinigende Scheibe herangezogen werden, was die strömungstechnische Wirkung dieser Schaufel erhöht. In Fig. 1 ist nun eingezeichnet, daß auch der Abschnitt 11 der Wischstange 10 eine solche schwach gekrümmte Kontur mit dem Radius R aufweist.

Durch die Anpassung der Wischstange an die Schauffelform werden besonders günstige strömungstechnische Eigenschaften ohne große Verwirbelungen erreicht. Außerdem wird das Aussehen eines solchen Wischhebels gegenüber den bekannten Ausführungen verbessert.

Optimale Ergebnisse erreicht man, wenn man die Länge A des Endbereichs der Wischstange 10 zwischen 100 und 200, insbesondere zwischen 120 und 160 mm wählt. Der seitliche Versatz soll dabei zwischen 20, vorzugsweise zwischen 12 und 16 mm betragen. Für den Versatz in der Höhe werden Werte zwischen 15 und 25, vorzugsweise zwischen 18 und 22 mm gewählt. Derartige Wischstangen können universell für die heute auf dem Markt befindlichen Wischblätter eingesetzt werden.

Abschließend wird noch darauf hingewiesen, daß nach dem Grundgedanken der vorliegenden Erfindung die Länge des vom Halteelement ausgehenden Abschnittes der Wischstange natürlich entsprechend vergrößert wird, wenn sich die Schaufel in Längsrichtung über den Hauptbügel hinaus in einen Bereich seitlich der Krallenbügel erstreckt. Die Länge dieses Wischstangenabschnittes könnte also auch der halben Wischblattlänge enstprechen.

Schließlich ist noch auf einen anderen Gedanken hinzuweisen, zu dem in der Zeichnung nur schematisch ein Ausführungsbeispiel dargestellt ist. Im Interesse eines optimalen Strömungsverhaltens sollten vorstehende Kanten oder schmale Spalte für den durchströmenden Fahrtwind möglichst vermieden werden. Dies gilt insbesondere auch für den Spalt zwischen der Wischstange und dem Steg oder Tragbügelrücken, der sich in Abhängigkeit von der Stellung des Wischblattes relativ zum Wischarm während des Wischbetriebes ändert. Dieser Spalt 80 wird durch eine Blende 81 abgedeckt, die vom Hauptbügel 31 über den Steg 34 dieses Hauptbügels 31 vorsteht. Diese Blende 81 kann als separates Teil an einer Seitenwange des Hauptbügels befestigt, beispielsweise angeklebt werden. Bei einem Wischblatt mit einem Kunststofftragbügel ist auch eine einstückige Bauweise möglich. Diese Blende kann andererseits auch am Wischarm fixiert werden. Wichtig ist lediglich, daß diese Blende ein Durchströmen des Fahrtwindes durch den Spalt verhindert und den Fahrtwind möglichst ohne größeren Widerstand über die Wischstange hinwegleitet. Die Form dieser Blende wird daher vorzugsweise auch der Form der Windleitschaufel angepaßt. Diese Blende wird sich dabei vorzugsweise über die gesamte Länge des Endbereichs der Wischstange bzw die halbe Schaufellänge erstrecken.

Dieser Gedanke der Spaltabdeckung zwischen Wischstange und Tragbügel bringt auch bei Wischblättern ohne Windleitschaufel bereits einen Vorteil. Dabei sind durchaus auch Lösungen denkbar, bei denen etwa vom Wischblatt an Seitenwangen derartige Blenden abstehen. An der Wischstange könnte ein im Querschnitt U-förmiges Bauteil mit beidseitig der Wischstange zum Wischblatt hinweisenden Blenden fixiert sein. Denkbar sind natürlich auch Ausführungen mit Blendenteilen am Wischblatt und am Wischarm, die ineinandergeschachtelt angeordnet sind.

## Patentansprüche

1. Wischhebel für eine Scheibenreinigungsanlage, insbesondere für Kraftfahrzeuge, mit einem Wischblatt (30) und mit einem Wischarm mit einer an einem Befestigungsteil fixierten Wischstange (10), die in einer ersten im wesentlichen zur Scheibe parallelen Ebene zweifach derart abgewinkelt ist, daß der am Befestigungsteil fixierte Abschnitt der Wischstange seitlich versetzt zum Endbereich der Wischstange angeordnet ist, der in ein Halteelement (14) für das Wischblatt (30) ausläuft, das zur Führung einer Wischleiste (38) ein Tragbügelsystem mit einem Hauptbügel (31) aufweist, dessen Seitenwangen einen Gelenkbolzen (35) zur Anlenkung des Halteelements (14) tragen, wobei der Hauptbügel (31) dieses Wischblattes (30) eine Windleitschaufel (40) aufweist, die in einem bestimmten Bereich längs des Hauptbügels (31) seillich von diesem abstehend verläuft und in einem bestimmten Abstand von der Gelenkstelle endet und daß die Wischstange (10) windleitschaufelseitig verläuft, dadurch gekennzeichnet, daß die Länge des Endbereichs (13) der Wischstange (10) vom Halteelement (14) bis zur ersten seitlichen Abbiegung (21) größer ist als der Abstand (WA) des Endes der Windleitschaufel (40) von der Gelenkstelle (35).

2. Wischhebel nach Anspruch 1, dadurch gekennzeichnet, daß die Länge des Endbereichs (13) der Wischstange (10) größer ist als die halbe Windleitschaufellänge (WA) und sich die Windleitschaufel (40) nahezu über die gesamte Länge des Hauptbügels (31) erstreckt.

3. Wischhebel nach Anspruch 1 oder 2, dadurch gekennzeichnet, daß der seitliche Versatz (VS) des am Befestigungsteil fixierten Abschnittes (11) der Wischstange (10) gegenüber dem Endbereich (13) der Wischstange (10) wenigstens in dem neben dem Wischblatt verlaufenden Bereich nicht größer ist als die seitliche Ausdehnung (BS) der Windleitschaufel (40).

4. Wischhebel nach Anspruch 3, dadurch gekennzeichnet, daß der seitliche Versatz (VS) des am Befestigungsteil fixierten Abschnittes (11) der Wischstange (10) gegenüber dem Endbereich (13) der Wischstange (10) derart gewählt ist, daß die vom Wischblatt abgewandte Seitenfläche (28) der Wischstange (10) wenigstens annähernd in Verlängerung der freistehenden Kante (45) der Windleitschaufel (40) verläuft.

5. Wischhebel nach wenigstens einem der vorhergehenden Ansprüche, dadurch gekennzeichnel, daß die Windleitschaufel (40) von dem der Wischleisle (38) zugewandien Rand (41) der Seitenwange (33) des Hauptbügels (31) ausgeht.

6. Wischhebel für eine Scheibenreinigungsanlage, insbesondere für Kraftfahrzeuge, mit einem Wischblatt (30) und mit einem Wischarm mit einer an einem Befestigungsteil fixierten Wischstange (10), die in einer ersten im wesentlichen zur Scheibe parallelen Ebene zweifach derart abgewinkelt ist, daß der am Befestigungsteil fixierte Abschnitt der Wischstange seitlich versetzt zum Endbereich der Wischstange angeordnet ist, der in ein Halteelement (14) für das Wischblatt (30) ausläuft, das zur Führung einer Wischleiste (38) ein Tragbügelsystem mit einem Hauptbügel (31) aufweist, dessen Seitenwangen einen Gelenkbolzen (35) zur Anlenkung des Halteelements (14) tragen, wobei der Hauptbügel (31) dieses Wischblattes (30) eine Windleitschaufel (40) aufweist, die in einem bestimmten Bereich längs des Hauptbügels (31) seitlich von diesem abstehend verläuft und in einem bestimmten Abstand von der Gelenkstelle endet, und daß die Wischstange (10) windleitschaufelseitig verläuft, wobei die Wischstange (10) in einer zur ersten Ebene im wesentlichen senkrechten zweiten Ebene zweifach abgewinkelt ist und damit der am Befestigungsteil fixierte Abschnitt (11) der Wischstange (10) in der Höhe versetzt zum Endbereich (13) der Wischstange (10) angeordnet ist, dadurch gekennzeichnet, daß die Länge des Endbereichs (13) der Wischstange (10) vom Haltelement (14) bis zur ersten Abbiegung (24) nach unten größer ist als der Abstand (WA) des Endes der Windleitschaufel (40) von der Gelenkstelle (35).

7. Wischhebel nach Anspruch 6, dadurch gekennzeichnet, daß sich diese Abbiegungen (24,25) in der zweiten Ebene unmittelbar an die seitlichen Abbiegungen (21,22) anschließen und der zum Befestigungsteil führende Abschnitt (11) der Wischstange (10) damit nahe am Rand der Windleitschaufel (40) beginnt.

8. Wischhebel nach Anspruch 6 oder 7, dadurch gekennzeichnet, daß dieser Versalz (VH) in der Höhe nicht größer ist als der Abstand des freien Randes (41) der Windleitschaufel (40) von der freistehenden Kante der Seitenwange bzw. dem Steg (34) des Hauptbügels (31).

9. Wischhebel nach Anspruch 6, 7 oder 8, dadurch gekennzeichnet, daß dieser Versatz (VH) in der Höhe derart gewählt ist, daß in der Betriebslage die der Wischleiste (38) zugewandle Stirnfläche (29) der Wischstange (10) wenigstens annähernd in Verlängerung der freistehenden Kante (45) der Windleitschaufel (40) verläuft.

10. Wischhebel für eine Scheibenreinigungsanlage, insbesondere für Kraftfahrzeuge, mit einem Wischblatt (30) und mit einem Wischarm mit einer an einem Befestigungsteil fixierten Wischstange (10), die in einer ersten im wesentlichen zur Scheibe parallelen Ebene zweifach derart abgewinkell ist, daß der am Befestigungsteil fixierte Abschnitt der Wischstange seitlich versetzt zum Endbereich der Wischstange angeordnet ist, der in ein Halteelement (14) für das Wischblatt (30) ausläuft, das zur Führung einer Wischleiste (38) ein Tragbügelsystem mit einem Hauptbügel (31) aufweist, dessen Seitenwangen einen Gelenkbolzen (35) zur Anlenkung des Halteelements (14) tragen, wobei der Hauptbügel (31) dieses Wischblattes (30) eine Windleitschaufel (40) aufweist, die in einem bestimmten Bereich längs des Hauptbügels (31) seitlich von diesem abstehend verläuft und in einem bestimmten Abstand von der Gelenkstelle endet und daß die Wischstange (10) windleitschaufelseitig verläuft, wobei die Wischstange (10) in einer zur ersten ebene im wesentlichen senkrechten zweiten

5

ebene zweifach abgewinkell ist und damit der am Befestigungsteil fixierte Abschnitt (11) der Wischstange (10) in der Höhe versetzt zum Endbereich (13) der Wischstange (10) angeordnet ist, dadurch gekennzeichnet, daß die Länge des Endbereichs (13) der Wischstange (10) vom Halteelement (14) bis zur ersten seitlichen Abbiegung (21) größer ist als der Abstand (WA) des Endes der Windleitschaufel (40) von der Gelenkstelle (35) und daß die Länge des Endbereichs (13) der Wischstange (10) vom Halteelement (14) bis zur ersten Abbiegung (24) nach unten größer ist als der Abstand (WA) des Endes der Windleitschaufel (40) von der Gelenkstelle (35).

11. Wischhebel nach wenigstens einem der Ansprüche 5 bis 10, dadurch gekennzeichnet, daß die freistehende Kante (45) der Windleitschaufel (40) eine der Scheibenkrümmung angepaßte bogenförmige Kontur aufweist und daß die Wischstange (10) wenigstens in dem neben dem Wischblatt liegenden Bereich ebenfalls eine der Scheibenkrümmung angepaßte bogenförmige Kontur aufweist.

12. Wischhebel nach wenigstens einem der vorhergehenden Ansprüche, dadurch gekennzeichnet, daß der Spalt (80) zwischen dem Endbereich (13) der Wischstange (10) und dem Steg (34) des Hauptbügels (31) wenigstens abschnittsweise auf der Anströmseite, bei einem Wischblatt mit einer Windleitschaufel (40) also auf der Seite der Windleitschaufel (40) durch eine Blende (81) abgedeckt ist.

13. Wischhebel nach Anspruch 12, dadurch gekennzeichnet, daß die Blende (81) am Hauptbügel (31) fixiert, insbesondere einslückig mit diesem aus Kunststoff gefertigt ist.

14. Wischhebel nach Anspruch 12, dadurch gekennzeichnet, daß die Blende (81) an der Wischstange fixiert ist.

15. Wischarm für einen Wischhebel gemäß wenigstens einem der vorhergehenden Ansprüche, dadurch gekennzeichnet, daß die Länge des Endbereichs (13) der Wischstange (10) vom Halteelement (14) bis zur ersten seitlichen Abbiegung (21) zwischen 100 und 200, insbesondere zwischen 120 und 160 mm beträgt.

16. Wischarm nach Anspruch 15, dadurch gekennzeichnet, daß der seitliche Versatz (VS) zwischen dem Endbereich (13) und dem zum Befestigungsteil führenden Abschnitt (11) der Wischstange (10) zwischen 10 und 20, insbesondere zwischen 12 und 16 mm beträgt.

17. Wischarm nach Anspruch 15 oder 16, dadurch gekennzeichnet, daß der Versatz (VH) in der Höhe zwischen dem Endbereich (13) und dem am Befestigungsteil fixierten Abschnitt (11) der Wischstange (10) zwischen 15 und 25, insbesondere zwischen 18 und 22 mm beträgt.

18. Wischarm nach wenigstens einem der Ansprüche 15 bis 17, dadurch gekennzeichnet, daß der am Befestigungsteil fixierte Abschnitt (11) der Wischstange (10) in einer Ebene senkrecht zur Scheibe wenigstens bereichsweise leicht gekrümmt ist.

## Claims

1. A wiper arm-and-blade assembly for a windscreen wiper system, especially for motor vehicles, comprising a wiper blade (30) and a wiper arm with a wiper rod (10) fixed to a fastening member, which wiper rod is deflected twice in a first plane substantially parallel to the windscreen in such a way, that the section of the wiper rod fixed to the fastening member is laterally displaced with respect to the end area of the wiper rod, which end area leads to a holding element (14) for the wiper blade (30), which wiper blade comprises a carrier yoke system with a main yoke (31) for guiding a rubber element (38), the side walls of which main yoke carry a pivot pin (35) for linking the holding element (14), whereby the main yoke (31) of this wiper blade (30) comprises a spoiler (40) running - in a predetermined section - along the main yoke (31) while laterally sticking out of it, and ending at a predetermined distance from the linking point and the wiper rod (10) extends atthe side of the spoiler, characterised in that the length of the end area (13) of the wiper rod (10) from the holding element (14) up to the first lateral deflection (21) is bigger than the distance (WA) between the end of the spoiler (40) and the linking point (35).

2. A wiper arm-and-blade assembly according to claim 1, characterised in that the length of the end area (13) of the wiper rod (10) is bigger than half of the length of the spoiler (WA) and that the spoiler (40) extends nearly along the whole length of the main yoke (31).

3. A wiper arm-and-blade assembly according to claim 1 or 2, characterised in that the lateral displacement (VS) of the section (11) of the wiper rod (10) fixed to the fastening member with respect to the end area (13) of the wiper rod (10) is not bigger at least in the area beside the wiper blade than the lateral extension (BS) of the spoiler (40).

4. A wiper arm-and-blade assembly according to claim 3, characterised in that the lateral displacement (VS) of the section (11) of the wiper rod (10) fixed to the fastening member with respect to the end area (13) of the wiper rod (10) is chosen in such a way that the side (28) of the wiper rod (10) turning away from the wiper blade is running at least approximately in extension to the free standing edge (45) of the spoiler (40).

5. A wiper arm-and-blade assembly according to at least one of the preceding claims, characterised in that the spoiler (40) starts off from the edge (41) of the side wall (33) of the main yoke (31) facing the rubber element (38).

6. A wiper arm-and-blade assembly for a windscreen wiper system, especially for motor vehicles, comprising a wiper blade (30) and a wiper arm with a wiper rod (10) fixed to a fastening member, which wiper rod is deflected twice in a first plane substantially parallel to the windscreen in such a way, that the section of the wiper rod fixed to the fastening member is laterally displaced with respect to the end area of the wiper rod, which end area leads to a holding element (14) for the wiper blade (30), which wiper blade comprises a carrier yoke system with a main yoke (31) for guiding a rubber element (30), the side walls of which main yoke carry a pivot pin (35) for linking the holding element (14), whereby the main yoke (31) of this wiper blade (30) comprises a spoiler (40) running - in a predetermined section - along the main yoke (31) while laterally sticking out of it, and ending at a predetermined distance from the linking point and the wiper rod (10) extends at the side of the spoiler, whereby the wiper rod (10) is deflected twice in a second plane substantially perpendicular to the first plane and thus regarding the height the section (11) of the wiper rod (10) fixed to the fastening member is displaced with respect to the end area (13) of the wiper rod (10), characterised in that the length of the end area (13) of the wiper rod (10) from the holding element (14) up to the first deflection (24) downwards is bigger than the distance (WA) between the end of the spoiler (40) and the linking point (35).

7. A wiper arm-and-blade assembly according to claim 6, characterised in that these deflections (24, 25) directly follow the lateral deflections (21, 22) in the second plane and in that the section (11) of the wiper rod (10) leading to the fastening member starts off closely to the end of the spoiler (40).

8. A wiper arm-and-blade assembly according to claim 6 or 7, characterised in that this displacement (VH) with respect to the height is not bigger than the distance between the free edge (41) of the spoiler (40) and the free standing edge of the side wall or of the web (34) of the main yoke (31).

9. A wiper arm-and-blade assembly according to claim 6, 7 or 8, characterised in that this displacement (VH) with respect to the height is chosen in such a way that in the operating position the transverse side (29) of the wiper rod (10) facing the rubber element (38) is running at least approximately in extension to the free standing edge (45) of the spoiler (40).

10. A wiper arm-and-blade assembly for a windscreen wiper system, especially for motor vehicles, comprising a wiper blade (30) and a wiper arm with a wiper rod (10) fixed to a fastening member, which wiper rod is deflected twice in a first plane substantially parallel to the windscreen in such a way, that the section of the wiper rod fixed to the fastening member is laterally displaced with respect to the end area of the wiper rod, which end area leads to a holding element (14) for the wiper blade (30), which wiper blade comprises a carrier yoke system with a main yoke (31) for guiding a rubber element (38), the side walls of which main yoke carry a pivot pin (35) for linking the holding element (14), whereby the main yoke (31) of this wiper blade (30) comprises a spoiler (40) running - in a predetermined section - along the main yoke (31) while laterally sticking out of it, and ending at a predetermined distance from the linking point and the wiper rod (10) extends at the side of the spoiler, whereby the wiper rod (10) is deflected twice in a second plane substantially perpendicular to the first plane and thus regarding the height the section (11) of the wiper rod (10) fixed to the fastening member is displaced with respect to the end area (13) of the wiper rod (10), characterised in that the length of the end area (13) of the wiper rod (10) from the holding element (14) up to the first lateral deflection (21) is bigger than the distance (WA) between the end of the spoiler (40) and the linking point (35) and in that the length of the end area (13) of the wiper rod (10) from the holding element (14) to the first deflection (24) downwards is bigger than the distance (WA) between the end of the spoiler (40) and the linking point (35).

11. A wiper arm-and-blade assembly according to at least one of claims 5 to 10, charcaterised in that the free standing edge (45) of the spoiler (40) has a bent contour adapted to the bend of the windshield and wherein at least in the area beside the wiper blade the wiper rod (10) also has a bent contour adapted to the bend of the windshield.

12. A wiper arm-and-blade assembly according to at least one of the preceding claims, characterised in that the gap (80) between the end area (13) of the wiper rod (10) and the web (34) of the main yoke (31) is at least in sections covered by a panel (81) on the side of the airstream, that is, as to a wiper blade with a spoiler (40) on the side of the spoiler (40).

13. A wiper arm-and-blade assembly according to claim 11, characterised in that the panel (81) is fixed to the main yoke (31), especially is integrally made of plastics with the main yoke.

14. A wiper arm-and-blade assembly according to claim 11, characterised in that the panel (81) is fixed to the wiper rod.

15. A wiper arm for a wiper arm-and-blade assembly according to at least one of the preceding claims, characterised in that the length of the end (13) of the wiper rod (10) from the holding element (14) up to the first lateral deflection (21) is between 100 and 200, especially between 120 and 160 mm.

16. A wiper arm according to claim 15, characterised in that the lateral displacement (VS) between the end

7

EP 0 368 090 B1

area (13) and the section (11) of the wiper rod (10) leading to the fastening member is between 10 and 20, especially between 12 and 16 mm.

17. A wiper arm according to claim 15 or 16, characterised in that the displacement (VH) with respect to the height between the end area (13) and the section (11) of the wiper rod (10) fixed to the fastening member is between 15 and 25, especially between 18 and 22 mm.

18. A wiper arm according to at least one of claims 15 to 17, characterised in that the section (11) of the wiper rod (10) fixed on the wiper rod in a plane perpendicularly to the windscreen is slightly bent at least in sections.

**Revendications**

1. Essuie-glace pour installation de nettoyage de glace, notamment pour véhicule automobile, comprenant un balai d'essuie-glace (30) et un bras d'essuie-glace comportant une tige d'éssuie-glace (10) qui est montée sur un élément de fixation et qui est coudée deux fois, dans un premier plan pratiquement parallèle à la glacé, d'une façon telle que la section de la tige d'essuie-glace qui est montée sur l'élément de fixation est disposée avec un déport transversal par rapport à la zone extrême de cette tige d'essuie-glace qui se termine par un élément (14) de maintien du balai d'essuie-glace (30), ce dernier comprenant, pour le guidage d'une lame de balai (38), un système d'étrier de support comportant un étrier principal (31) dont les ailes latérales portent un axe d'articulation (35) permettant le montage articulé de l'élément de maintien (14), tandis que cet étrier principal (31) du balai d'essuie-glace (30) comporte une ailette pare-vent (40) qui s'étend sur une zone déterminée le long de l'étrier principal (31) de façon à faire saillie transversalement par rapport à ce dernier et qui se termine à une distance déterminée de l'emplacement d'articulation, la tige d'essuie-glace (10) s'étendant du côté de cette ailette pare-vent, caractérisé en ce que la longueur de la zone extrême (13) de la tige d'essuie'glace (10), de l'élément de maintien (14) jusqu'au premier coude transversal (21), est supérieure à la distance (WA) séparant l'extrémité de l'ailette pare-vent (40) de l'emplacement d'articulation (35).

2. Essuie-glace suivant la revendication 1, caractérisé en ce que la longueur de la zone extrême (13) de la tige d'essuie-glace (10) est supérieure à la demi-longueur (WA) de l'ailette pare-vent (40) et en ce que cette dernière s'étend sur presque toute la longueur de l'étrier principal (31).

3. Essuie-glace suivant la revendication 1 ou 2, caractérisé en ce que le déport transversal (VS) de la section (11) de la tige d'essuie-glace (10) qui est montée sur l'élément de fixation, par rapport à la zone extrême (13) de cette tige d'essuie-glace (10) n'est pas supérieur, au moins dans la zoné s'étendant à côtédu balai d'essuie-glace, à l'étendue transversale (BS) de l'ailette pare-vent (40).

4. Essuie-glace suivant la revendication 3, caractérisé en ce que le déport transversal (VS) de la section (11) de la tige d'essuie-glace (10) quį est montée sur l'élément de fixation, par rapport à la zone extrême (13) de cette tige d'essuie-glace (10) est choisi de façon telle que la surface latérale (28) de la tige d'essuie-glace (10) qui est située à l'opposé du balai d'essuie-glace s'étend au moins approximativement dans le prolongement du bord libre (45) de l'ailette pare-vent (40).

5. Essuie-glace suivant au moins l'une des revendications précédentes, caractérisé en ce que l'ailette pare-vent (40) part du bord (41) de l'aile latérale (33) de l'étrier principal (31) qui est tourné vers la lama de balai (38).

6. Essuie-glace pour installation de nettoyage de glace, notamment pour véhicule automobile, comprenant un balai d'essuie-glace (30) et un bras d'essuie-glace comportant une tige d'essuie-glace (10) qui est montée sur un élément de fixation et qui est coudée deux fois, dans un premier plan pratiquement parallèle à la glace, d'une façon telle que la section de la tige d'essuie-glacé qui est montée sur l'élément de fixation est disposée avec un déport transversal par rapport à la zone extrême de cette tige d'essuie-glace qui se termine par un élément (14) de maintien du balai d'essuie-glace (30), ce dernier comprenant, pour le guidage d'une lame de balai (38), un système d'étrier de support comportant un étrier principal (31) dont les ailes latérales portent un axe d'articulation (35) permettant le montage articulé de l'élément de maintien (14), tandis que cet étrier principal (31) du balai d'essuie-glace (30) comporte une ailette pare-vent (40) qui s'étend sur une zone déterminée le long de l'étrier principat (31) de façon à faire saillie transversalément par rapport à ce dernier et qui se termine à une distance déterminée de l'emplacement d'articulation, la tige d'essuie-glace (10) s'étendant du côté de cette ailette pare-vent, tandis que cette tige (10) est coudée deux fois dans un second plan pratiquement perpendiculaire au premier plan et qu'ainsi, la section (11) de cette tige (10) qui est montée sur l'élément de fixation est disposée avec un déport en hauteur par rapport à la zone extrême (13) de la tige (10), caractérisé en ce que la longueur de la zone extrême (13) de la tige d'essuie-glace (10), de l'élément de maintien (14) jusqu'au premier coude (24) dirigé vers le bas, est supérieure à la distance (WA) séparant l'extrémité de l'ailette pare-vent (40) de l'emplacement d'articulation (35).

8

7. Essuie-glace suivant la revendication 6, caractérisé en ce que les coudes (24, 25) situés dans le second plan sont disposés directement à la suite des coudes transversaux (21, 22) et en ce que la section (11) de la tige d'essuie-glace (10) qui conduit à l'élément de fixation commence ainsi près du bord de l'ailette pare-vent (40).

8. Essuie-glace suivant la revendication 6 ou 7, caractérisé en ce que le déport (VH) en hauteur n'est pas supérieur à la distance existant entre le bord (41) de l'ailette pare-vent (40) et le bord libre de l'aile latérale, ou bien le fond (34) de l'étrier principal (31).

9. Essuie-glace suivant la revendication 6, 7 ou 8, caractérisé en ce que le déport (VH) en hauteur est choisi de façon telle que, dans la position de service, la surface frontale (29) de la tige d'essuie-glace (10) qui est tournée vers la lame de balai (38) s'étend au moins approximativement dans le prolongement du bord libre (45) de l'ailette pare-vent (40).

10. Essuie-glace pour installation de nettoyage de glace, notamment pour véhicule automobile, comprenant un balai d'essuie-glace (30) et un bras d'essuie-glace comportant une tige d'essuie-glace (10) qui est montée sur un élément de fixation et qui est coudée deux fois, dans un premier plan pratiquement parallèle à la glace, d'une façon telle que la section de la tige d'essuie-glace qui est montée sur l'élément de fixation est disposée avec un déport transversal par rapport à la zone extrême de cette tige d'essuie-glace qui se terminé par un élément (14) de maintien du balai d'essuie-glace (30), ce dernier comprenant, pour le guidage d'une lamé de balai (38), un système d'étrier de support comportant un étrier principal (31) dont les ailes latérales portent un axe d'articulation (35) permettant le montage articulé de l'élément de maintien (14), tandis que cet étrier principal (31) du balai d'essuie-glacé (30) comporte une ailette pare-vent (40) qui s'étend sur une zone déterminée le long de l'étrier principal (31) de façon à faire saillie transversalement par rapport à ce dernier et qui se termine à une distance déterminée de l'emplacement d'articulation, la tige d'essuie-glace (10) s'étendant du côté de cette ailette pare-vent, tandis que cette tige (10) est coudée deux fois dans un second plan pratiquement perpendiculaire au premier plan et qu'ainsi, la section (11) de cette tige (10) qui est montée sur l'élément de fixation est disposée avec un déport en hauteur par rapport à la zone extrême (13) de la tige (10), caractérisé en ce que la longueur de la zone extrême (13) de la tige d'essuie-glace (10), de l'élément de maintien (14) jusqu'au premier coudé transversal (21), est supérieure à la distance (WA) séparant l'extrémité de l'ailette pare-vent (40) de l'emplacement d'articulation (35) et en ce que la longueur de la zone extrême (13) de la tige d'essuie-glace (10), de l'élément de maintien (14) jusqu'au premier coude (24) dirigé vers le bas, est supérieure à la distance (WA) séparant l'extrémité de l'ailette pare-vent (40) de l'emplacement d'articulation (35).

11. Essuie-glace suivant au moins l'une des revendications 5 à 10, caractérisé en ce que le bord libre (45) de l'ailette pare-vent (40) présente un profil cintré adapté à la courbure de la glace et en ce que la tige d'essuie-glace (10) présente aussi, au moins dans la zone située à côté du balai d'essuie-glace, un profil cintré adapté à la courbure de la glace.

12. Essuie-glace suivant au moins l'une des revendications précédentes, caractérisé en ce que l'intervalle (80) existant entre la zone extrême (13) de la tige d'essuie-glacé (10) et le fond (34) de l'étrier principal (31) est recouvert, au moins d'une manière localisée, par un cache (81) disposé du côté d'arrivée du vent relatif, donc du côté de l'ailette pare-vent (40) dans le cas d'un balai d'essuie-glace comportant une telle ailette.

13. Essuie-glace suivant la revendication 12, caractérisé en ce que le cache (81) est fixé sur l'étrier principal (31), notamment en étant réalisé d'une pièce, en matière plastique, avec ce dernier.

14. Essuie-glace suivant la revendication 12, caractérisé en ce que le cache (81) est fixé sut la tige d'essuie-glace.

15. Bras d'essuie-glace pour essuie-glace suivant au moins une des revendications précédentes, caractérisé en ce que la longueur de la zone extrême (13) de la tige d'essuie-glace (10), de l'élément de maintien (14) au premier coude transversal (21), est comprise entré 100 et 200 mm, notamment entre 120 et 160 mm.

16. Bras d'essuie-glace suivant la revendication 15, caractérisé en ce que le déport transversal (VS) entre la zone extrême (13) et la section (11) de la tige d'essuie-glacé (10) qui conduit à l'élément de fixation est compris antre 10 et 20 mm, notamment entre 12 et 16 mm.

17. Bras d'essuie-glace suivant la revendication 15 ou 16, caractérisé en ce que le déport (VH) en hauteur entre la zone extrême (13) et la section (11) de la tige d'essuie-glace (10) qui est montée sur l'élément de fixation est compris entre 15 et 25 mm, notamment entre 18 et 22 mm.

18. Bras d'essuie-glace suivant au moins l'une des revendications 15 à 17, caractérisé an ce que la section (11) de la tige d'essuie-glace (10) est montée sur l'élément de fixation est légèrement cintrée, au moins d'une manière localisée, dans un plan perpendiculaire à la glace.

Fig.1

Fig.2

Fig.3